# EUROPÄISCHE PATENTSCHRIFT

(11) **EP 2 819 061 B1**
(45) Veröffentlichungstag und Bekanntmachung des Hinweises auf die Patenterteilung: **30.11.2022**
(21) Anmeldenummer: 14170872.7
(22) Anmeldetag: 03.06.2014
(51) Int. Cl.: G06K 7/10, G06K 19/07

(54) **Verfahren zum Auslesen eines RFID Transponders und Ansteuerung einer Zutrittskontrollanlage**
Method for reading an RFID transponder and control of an access control system
Procédé de lecture d'un transpondeur RFID et commande d'une installation de contrôle d'accès

(30) Priorität: 27.06.2013 DE 102013212431
(43) Veröffentlichungstag der Anmeldung: 31.12.2014
(73) Patentinhaber: Aug. Winkhaus GmbH & Co. KG, 48291 Telgte (DE)
(72) Erfinder: Pape, Peter, 59192 Bergkamen (DE)

(56) Entgegenhaltungen:
- EP-A1- 0 568 067
- US-A1- 2009 243 796

## Beschreibung

Die Erfindung betrifft ein Verfahren zum Auslesen eines RFID Transponders und Ansteuerung einer Zutrittskontrollanlage, wobei ein mit dem Transponder verbundener Antennenschwingkreis durch eine von einem Lesegerät erzeugte Trägerfrequenz induktiv angeregt wird, der Transponder (2) durch die Anregung mit elektrischem Strom versorgt wird, Daten des Transponders über Amplitudenmodulation der Trägerfrequenz übertragen werden und die Trägerfrequenz mittels einer Abfolge von Energieimpulsen erzeugt wird und wobei die Ansteuerung der Zutrittskontrollanlage in Abhängigkeit von der übertragenen Daten erfolgt.

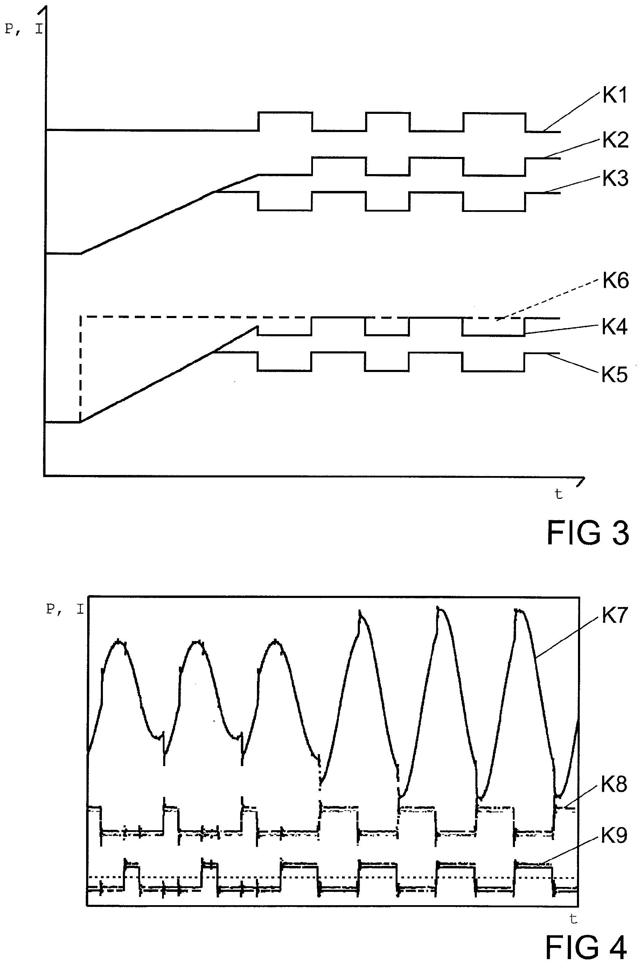

Die Versorgung des Transponders in RFID-Systemen mit Energie erfolgt durch ein induktiv gekoppeltes magnetisches Wechselfeld, welches von dem zum Auslesen des Transponders benötigten Lesegerät erzeugt wird. Die Datenübertragung zwischen Lesegerät und Transponder erfolgt durch Lastmodulation des Trägersignals. Dieses Verfahren ist im RFID Handbuch, Klaus Finkenzeller, 5. Auflage, Hanser Verlag in Abb. 3.13 und Abb. 3.16 beschrieben.

Aus der EP 0 568 067 A1 ist ein Hochfrequenz-Identifizierungssystem bekannt geworden. Das System sendet einen kurzen Abfrageimpuls und überwacht für eine noch kürzere Dauer ein Antwortsignal des Transponders. Auf das Fehlen des Antwortsignals erhöht die Abfrageeinrichtung schrittweise die Abfrageimpulsdauer. Das Antwortsignal zeigt an, dass der Transponder ausreichend Leistung erhalten hat.

Aus der US 2009/0243796 A1 ist ein Gerät zur Aktivierung von Steuerungsfunktionen an einem Kraftfahrzeug bekannt. Das Gerät wird drahtlos angesteuert.

Aus der DE 199 06 578 A1 ist ein Schlüssel mit einem passiven Transponder und ein in einem Schließzylinder angeordnetes Lesegerät zum Auslesen des Transponders bekannt geworden. Das Lesegerät hat zur Erzeugung des Wechselfeldes, zum Auslesen des Transponders, zur Verarbeitung von ausgelesenen Signalen des Transponders und zur Ansteuerung der Schließeinrichtung eine Batterie. Um eine möglichst lange Lebensdauer der Batterie zu gewährleisten, ist es wünschenswert, Verluste des erzeugten magnetischen Wechselfeldes möglichst gering zu halten.

Die EP 1 617 383 A2 offenbart ein Verfahren zum Auslesen eines einen passiven Transponder aufweisenden Schlüssels. Das zum Auslesen des Transponders vorgesehene Lesegerät überträgt die Aktivierungsenergie über eine Entfernung bis zu zwei Metern, so dass ein Benutzer den Schlüssel nicht mehr hervorholen muss. Da die Entfernung des Schlüssels von dem Lesegerät mit der Bewegung des Benutzers schwankt, ist auch das induktiv auf den Schlüssel übertragene magnetische Wechselfeld veränderlich.

Unter der Berücksichtigung von Bauteiltoleranzen wechselnden Entfernungen des Transponders von dem Lesegerät und sonstigen Umweltbedingungen muss in jedem Fall ausreichend Energie abgestrahlt werden, um die Antenne des Transponders ausreichend anzuregen. Die Amplitude der Trägerfrequenz wird daher so gewählt, dass alle denkbaren Einflüsse und zusätzlich eine ausreichende Reserve berücksichtigt sind. Dies führt jedoch zu einem sehr hohen Energieverbrauch bei der Erzeugung des Wechselfeldes. Ein weiterer Nachteil entsteht, wenn bei der Lastmodulation beispielsweise ein Widerstand parallel zur Antenne geschaltet wird und dadurch der Antenne Energie entzogen wird. Diese Energie wird in Wärme umgewandelt und ist somit verloren.

Wird die Amplitude des Trägers über ein vorgesehenes Maß erhöht, geht der Antennenschwingkreis des Transponders in Sättigung und eine Lastmodulation ist nicht mehr möglich. Der Erfindung liegt das Problem zugrunde, ein Verfahren der eingangs genannten Art so weiter zu bilden, dass die abgestrahlte Energie möglichst gering gehalten wird.

Gemäß Anspruch 1 wird ein solches Verfahren bereitgestellt. Bevorzugte Ausführungsformen sind in den abhängigen Ansprüchen 2-4 definiert.

Dieses Problem wird erfindungsgemäß dadurch gelöst, dass die von einer Bestromungsdauer einer Antenne des Lesegerätes durch eine Stromquelle bestimmte Weite der Energieimpulse variiert wird, bis die Antenne die Signale des Transponders empfängt und dass die Weite der Energieimpulse konstant gehalten wird und die Antenne die Signale des Transponders empfängt und dass die Trägerfrequenz und die Phasenlage gegenüber der Frequenz und der Phasenlage an Kontakten CKL A und CKL B vor einer Verstärkerschaltung bei der Variierung der Weite der Energieimpulse konstant gehalten werden.

Durch diese Gestaltung wird das Verhältnis von Impulsdauer zu Impulspause verändert. Entspricht die Impulsdauer der Impulspause, ist die maximale Leistung der Antenne erreicht. Steigt die Impulspause bei entsprechend abnehmender Impulsdauer, sinkt die Leistung der Antenne bei gleicher Trägerfrequenz. Die in den Schwingkreis eingebrachte Energie wird jedoch ausschließlich von der Impulsdauer bestimmt. Hierdurch wird bei der Anregung der Antenne die Energie ermittelt, die zum Auslesen des Transponders notwendig ist. Empfängt die Antenne die Signale des Transponders, ist die Dauer der Energieimpulse zum Auslesen des Transponders ausreichend. Das erfindungsgemäße Verfahren eignet sich sowohl zum Auslesen von passiven Transpondern als auch von Transpondern mit eigener Stromversorgung, bei denen die Übertragung der Daten des Transponders durch Modulation des von dem Lesegerät ausgesendeten Trägersignals erfolgt. Weiterhin eignet sich das Verfahren auch in Systemen, bei denen zwei RFID Interfaces mit je einem Transponder und einem Lesegerät diese so schalten, dass eine bidirektionale Kommunikation entsteht. Frequenzsprünge während der Übertragung der Signale lassen sich zuverlässig vermeiden, weil die Weite der Energieimpulse konstant gehalten wird und die Antenne die Signale des Transponders empfängt. Eine Beeinflussung der von dem Transponder abgegebenen Signalfolge durch die Variierung der Weite der Energieimpulse lässt sich zuverlässig vermeiden, weil die Trägerfrequenz und die Phasenlage gegenüber der Frequenz und der Phasenlage an Kontakten CKL A und CKL B vor einer Verstärkerschaltung bei der Variierung der Weite der Energieimpulse konstant gehalten werden. Durch die hierdurch erzeugte frequenz- und phasenstabile Puls-Weiten-Modulation kann die abgestrahlte Leistung des Transponders bei der Datenübertragung so geregelt werden, dass bei vorgegebener Kommunikationsreichweite keine nennenswerten Verluste entstehen. Dieses Verfahren führt bei der Versorgung des Lesegerätes mit einer Batterie zu einer deutlichen Verlängerung der Batteriestandszeiten als bei einer Datenübertragung mittels Lastmodulation.

Die Stärke des erzeugten Wechselfeldes und damit die von dem Lesegerät abgestrahlte Energie lässt sich gemäß einer vorteilhaften Weiterbildung der Erfindung besonders gering halten, wenn von einem Startwert aus die Weite der Energieimpulse von einem geringen Wert zu einem größeren Wert hin gesteigert wird. Durch diese Gestaltung wird die von der Antenne abgestrahlte Leistung so lange angehoben, bis der Transponder antwortet. Eine Abstrahlung von den Bedarf des Transponders übersteigender Energie wird dank der Erfindung vermieden. Dies hat zur Folge, dass der den Antennenschwingkreis versorgenden Stromquelle nur die tatsächlich benötigte Energie entnommen wird.

Die mit dem Verfahren arbeitende Zutrittskontrollanlage weist gemäß einer anderen vorteilhaften Weiterbildung der Erfindung eine besonders lange Lebensdauer auf, wenn eine Batterie zur Versorgung des Antennenschwingkreises mit elektrischem Strom in dem mit der Zutrittskontrollanlage verbundenen Lesegerät angeordnet ist. Die Zutrittskontrollanlage hat meist ausreichend Platz zur Aufnahme einer Batterie mit einer besonders großen Kapazität.

Bei dem Ausfall der Batterie lässt sich die mit dem Verfahren arbeitende Zutrittskontrollanlage gemäß einer anderen vorteilhaften Weiterbildung der Erfindung dennoch ansteuern, wenn eine Batterie zur Versorgung des Antennenschwingkreises mit elektrischem Strom in dem Schlüssel angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch ein Lesegerät beim Auslesen eines RFID Transponders,
- Fig. 2: einen Schaltplan zum Betrieb des Lesegerätes aus Figur 1,
- Fig. 3: ein Diagramm über die von einer Antenne des Lesegerätes aus Figur 1 abgestrahlte Leistung über der Stromaufnahme der Antenne
- Fig. 4: ein Amplitudenverlauf an der Antenne in Abhängigkeit von der Stromaufnahme,
- Fig. 5: ein Flussdiagramm eines Verfahrens zum Auslesen der Daten des Transponders.

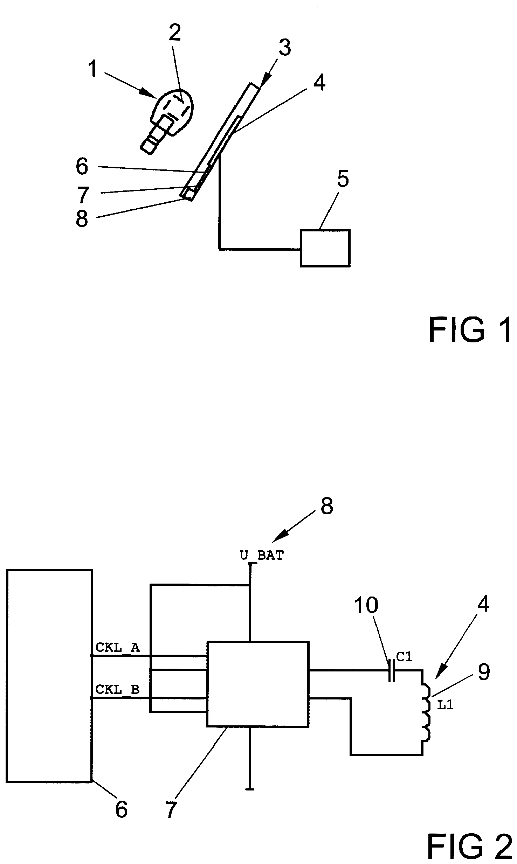

Figur 1 zeigt schematisch einen Schlüssel 1 mit einem RFID Transponder 2 vor einem Lesegerät 3 zum Auslesen des RFID Transponders 2. Der Transponder 2 hat einen nicht näher dargestellten Antennenschwingkreis, der von dem Lesegerät 3 angeregt wird. Dieses Lesegerät 3 hat eine Antenne 4 und steuert eine Zutrittskontrollanlage 5 an. Das Lesegerät 3 hat eine elektronische Schaltung 6 zur Erzeugung eines Treibersignals und eine Verstärkerschaltung 7. Die Verstärkerschaltung 7 wird von einer Batterie 8 mit elektrischem Strom versorgt. Die Antenne 4 erzeugt in regelmäßigen Abständen ein magnetisches Feld. Bewegt man den Schlüssel 1 in die Nähe und damit in den Empfangsbereich des Lesegerätes 3, wird der RFID Transponder 2 ausgelesen. Verschiedene Verfahren zum Datenaustausch zwischen dem RFID Transponder des Schlüssels und dem Lesegerät sind im RFID Handbuch, Klaus Finkenzeller, 5. Auflage, Hanser Verlag beschrieben, so dass zur weiteren Offenbarung hierauf verwiesen wird. Die Zutrittskontrollanlage 5 kann vielfältig gestaltet sein und beispielsweise im einfachsten Fall einen gewöhnlichen elektromagnetisch aktivierbaren Sperrmechanismus eines nicht dargestellten Schließzylinders aufweisen.

Figur 2 zeigt einen Schaltplan des Lesegerätes 3 aus Figur 1. Hierbei ist zu erkennen, dass die Schaltung 6 des Lesegerätes 3 als Treibergeber mit den Kontakten CKL_A und CKL_B ausgebildet ist. An diesen Kontakten ist die Verstärkerschaltung 7 angeschlossen. Bei ungleichen Potentialen an den in Figur 2 dargestellten Kontakten CLK_A und CLK_B fließt ein Strom durch die Antenne 4. Der Stromfluss ist ein Maß für die abgestrahlte Leistung. Bei einer Puls-Weiten-Modulation von 50% ist die abgestrahlte Leistung maximal. Die Antenne 4 bildet mit einer Induktivität 9 und einer Kapazität 10 einen Antennenschwingkreis.

Figur 3 zeigt in einem Diagramm die von der Antenne 4 des Lesegerätes 3 abgestrahlte Leistung beim Auslesen des RFID-Transponders 2 aus Figur 1. Darunter ist die für die abgestrahlte Leistung erforderliche Stromaufnahme der Antenne 4 des Lesegerätes 3 dargestellt. Mit der Kurve K1 ist der vorgesehene Signalverlauf der Modulation dargestellt. Die Kurve K2 kennzeichnet die maximal von der Antenne des Lesegerätes abstrahlbare Leistung, während die Kurve K3 die tatsächlich von der Antenne 4 abgestrahlte Leistung darstellt. Die tatsächlich von der Antenne 4 abgestrahlte Leistung liegt meist unterhalb der maximal möglichen Leistung. Die Kurve K4 kennzeichnet die Stromaufnahme der Antenne 4 zur Abgabe der maximal möglichen Leistung, während die Kurve K5 die Stromaufnahme für die Erzeugung der tatsächlich von der Antenne 4 abzustrahlenden Leistung darstellt. Zum Vergleich ist mit K6 eine Kurve dargestellt, welche die Stromaufnahme der Antenne 4 bei einer Lastmodulation nach dem Stand der Technik darstellt.

Die Verringerung der abgestrahlten Leistung gegenüber der maximal möglichen Leistung erfolgt erfindungsgemäß über eine Puls-Weiten-Modulation, wie sie in Figur 4 dargestellt ist. Im oberen Bereich der Figur 4 ist mit der Kurve K7 die von der Antenne 4 abgestrahlte Leistung dargestellt. Im unteren Bereich der Figur 4 sind mit den Kurven K8 und K9 Abfolgen von Energieimpulsen an den Kontakten CKL-A und CKL-B der als Treibergeber ausgebildeten Schaltung 6 aus Figur 2 dargestellt. Im linken Abschnitt der Figur 4 sind die Energieimpulse nur sehr kurz, so dass die abgestrahlte Leistung gering ist. Im rechten Abschnitt der Figur 4 sind die Energieimpulse so lang, dass auf den Energieimpuls in Kurve K8 unmittelbar ein Energieimpuls in Kurve K9 folgt. Dies stellt die maximal mögliche Abstrahlleistung der Antenne 4 dar.

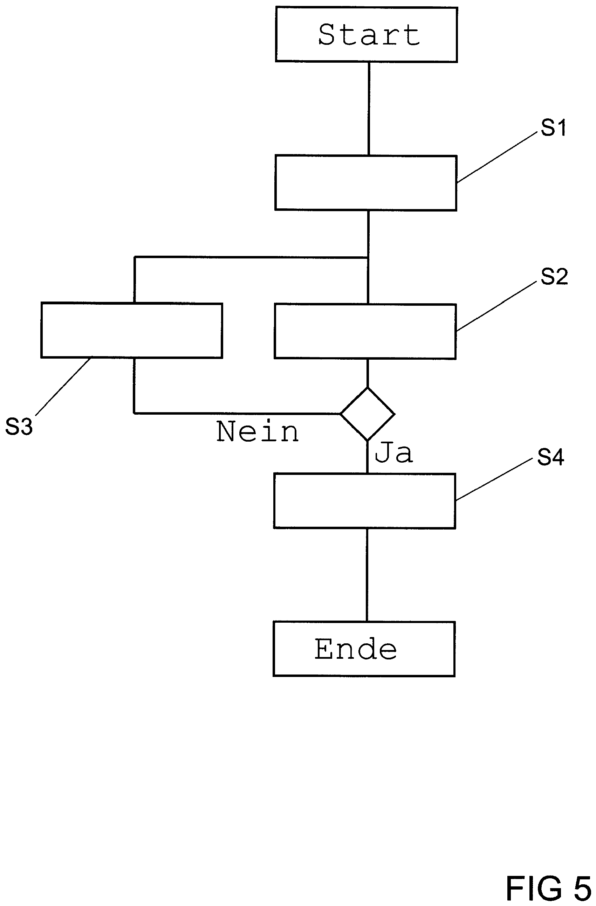

Verfahrensschritte zum Auslesen des Transponders 2 sind stark vereinfacht in Figur 5 dargestellt. Beim Start des Programms wird erfasst, ob sich ein Transponder 2 im Empfangsbereich des Lesegerätes 3 befindet. Im Schritt S1 wird mit einem Startwert mit einer geringen Impulsweite gestartet. Im Schritt S2 wird getestet, ob Signale von dem Transponder 2 empfangen werden können. Wenn dies zutrifft, werden im Schritt S4 die Daten des Transponders 2 ausgelesen. Das Programm ist damit beendet. Wenn jedoch im Schritt S2 keine Daten ausgelesen werden können, wird im Schritt S3 die von der Antenne 4 abgestrahlte Leistung über die Puls-Weiten-Modulation um einen vorgesehenen Schritt gesteigert und erneut im Schritt S2 getestet, ob Signale von dem Transponder 2 empfangen werden können.

## Patentansprüche

1. Verfahren zum Auslesen eines RFID Transponders (2) und Ansteuerung einer Zutrittskontrollanlage, wobei ein mit dem Transponder (2) verbundener Antennenschwingkreis durch eine von einem Lesegerät (3) erzeugte Trägerfrequenz induktiv angeregt wird, der Transponder (2) durch die Anregung mit elektrischem Strom versorgt wird, Daten des Transponders (2) über Amplitudenmodulation der Trägerfrequenz übertragen werden und die Trägerfrequenz mittels einer Abfolge von Energieimpulsen erzeugt wird und wobei die Ansteuerung der Zutrittskontrollanlage in Abhängigkeit von der übertragenen Daten erfolgt, wobei die von einer Bestromungsdauer einer Antenne (4) des Lesegerätes (3) durch eine Stromquelle bestimmte Weite der Energieimpulse variiert wird, bis die Antenne (4) die Signale des Transponders (2) empfängt und dass die Weite der Energieimpulse konstant gehalten wird und die Antenne (4) die Signale des Transponders (2) empfängt und dass die Trägerfrequenz und die Phasenlage gegenüber der Frequenz und der Phasenlage an Kontakten (CKL A) und (CKL B) vor einer Verstärkerschaltung (7) bei der Variierung der Weite der Energieimpulse konstant gehalten werden.

2. Verfahren nach Anspruch 1, **dadurch gekennzeichnet, dass** von einem Startwert aus die Weite der Energieimpulse von einem geringen Wert zu einem größeren Wert hin gesteigert wird.

3. Verfahren nach einem der Ansprüche 1 bis 2, **dadurch gekennzeichnet, dass** eine Batterie (8) zur Versorgung des Antennenschwingkreises mit elektrischem Strom in dem mit der Zutrittskontrollanlage (5) verbundenen Lesegerät (3) angeordnet ist.

4. Verfahren nach einem der Ansprüche 1 bis 2, **dadurch gekennzeichnet, dass** eine Batterie (9) zur Versorgung des Antennenschwingkreises mit elektrischem Strom in dem Schlüssel (1) angeordnet ist.

## Claims

1. A method for reading an RFID transponder (2) and control of an access control system, wherein an antenna resonant circuit connected to the transponder (2) is inductively excited by a carrier frequency generated by a reader (3), the transponder (2) is supplied with electrical current by the excitation, data of the transponder (2) are transmitted via amplitude modulation of the carrier frequency and the carrier frequency is generated by a sequence of energy impulses and wherein the control of the access control system occurs in dependence on the transmitted data, wherein the width of a current feed duration of an antenna (4) of the reader (3) determined by a current source of the energy impulses is varied until the antenna (4) receives the signals of the transponder (2) and that the width of the energy impulses is kept constant and the antenna (4) receives the signals of the transponder (2) and that the carrier frequency and the phase position with respect to the frequency and the phase position at contacts (CKL A) and (CKL B) before an amplifier circuit (7) are kept constant in the event of the variation of the width of the energy impulses.

2. The method according to claim 1, **characterized in that**, proceeding from a start value, the width of the energy impulses is increased from a lower value to a greater value.

3. The method according to any of claims 1 to 2, **characterized in that** a battery (8) for supplying the antenna resonant circuit with electrical current is arranged in the reader (3) connected to the access control system (5).

4. The method according to any of claims 1 to 2, **characterized in that** a battery (9) for supplying the antenna resonant circuit with electrical current is arranged in the key (1).

## Revendications

1. Procédé pour la lecture d'un transpondeur (2) RFID et la commande d'une installation de contrôle d'accès, dans lequel un circuit résonant d'antenne relié au transpondeur (2) est excité de manière inductive par une fréquence porteuse produite par un lecteur (3), le transpondeur (2) est alimenté en courant électrique par l'excitation, les données du transpondeur (2) sont transmises par l'intermédiaire de la modulation d'amplitude de la fréquence porteuse et la fréquence porteuse est générée au moyen d'une suite d'impulsions d'énergie et dans lequel la commande de l'installation de contrôle d'accès s'effectue en fonction des données transmises, dans lequel la largeur des impulsions d'énergie définie par une durée d'alimentation en courant d'une antenne (4) du lecteur (3) par une source de courant est modifiée jusqu'à ce que l'antenne (4) reçoive les signaux du transpondeur (2) et que la largeur des impulsions d'énergie est maintenue constante et l'antenne (4) reçoit les signaux du transpondeur (2) et que la fréquence porteuse et la position de phase sont maintenues constantes par rapport à la fréquence et la position de phase sur des contacts (CKL A) et (CKL B) devant un circuit d'amplificateur (7) lors de la modification de la largeur des impulsions d'énergie.

2. Procédé selon la revendication 1, **caractérisé en ce qu'**à partir d'une valeur de départ la largeur des impulsions d'énergie est augmentée à partir d'une faible valeur jusqu'à une valeur plus grande.

3. Procédé selon l'une quelconque des revendications 1 à 2, **caractérisé en ce qu'**une batterie (8) pour l'alimentation du circuit résonant d'antenne avec du courant électrique est disposée dans le lecteur (3) relié à l'installation de contrôle d'accès (5).

4. Procédé selon l'une quelconque des revendications 1 à 2, **caractérisé en ce qu'**une batterie (9) pour l'alimentation du circuit résonant d'antenne avec du courant électrique est disposée dans la clé (1).
